# EUROPEAN PATENT APPLICATION

(11) **EP 2 116 873 A2**
(43) Date of publication of application: **11.11.2009**
(21) Application number: 09155150.7
(22) Date of filing: 13.03.2009
(51) Int. Cl.: G02B 5/02

(54) **Optical diffuser film with linear domains of varying diffusion**

(30) Priority: 07.05.2008 US 151514
(71) Applicant: SKC Haas Display Films Co., Ltd., Choongchungnamdo (KR)
(72) Inventor: Laney, Thomas M., Spencerport, NY 14559 (US); Best, Jr., Kenneth W., Hilton, NY 14468 (US)
(74) Representative: Kent, Venetia Katherine

(57) **Abstract**

The present invention provides an optical diffuser film (200) with linear domains (201) of varying diffusion, the linear domains comprising light scattering particles (210) located on at least one surface of the film, wherein the linear domains are tapered such that the thickness at a center of a cross section of the linear domain is thicker than that at an edge of the linear domain.

## Description

### FIELD OF THE INVENTION

The present invention relates to a liquid crystal display (LCD) device, more particularly, to an optical diffuser film that is capable of reducing the thickness of an LCD device and a method of fabricating the optical diffuser film.

### BACKGROUND OF THE INVENTION

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example, some LCD monitors and LCD televisions (LCD-TVs) are directly illuminated using a number of light sources positioned behind the LCD panel. This arrangement is increasingly common with larger displays, because the light power requirements, to achieve a certain level of display brightness, increase with the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, hence a diffuser plate is used to smooth the illumination profile at the back of the LCD device.

U.S. Patent Publication No. 2006/0285352 a backlight unit includes a light source, a diffusion plate disposed over the light source to diffuse a light from the light source, and a plurality of optical sheets disposed on the diffusion plate, wherein the plurality of optical sheets includes at least one diffusion sheet that is provided with a plurality of beads, and the density of the beads is varied in the width direction corresponding to the position of the light source.

Although the diffuser plate is very efficient at uniformizing the light intensity emitted from the CCFLs, the diffuser plate typically must be positioned with a significant air gap between the CCFLs and the diffuser plate. Without this spacing the uniformity of the light begins to decay and brighter lines of luminance can be visually observed. Current trends in the market require that LCD displays be thinner. Therefore, it is desirable to reduce the space required between the diffuser plate and the CCFLs in order to thin the entire LCD display profile.

### SUMMARY OF THE INVENTION

The present invention provides an optical diffuser film with linear domains of varying diffusion, the linear domains comprising light scattering particles located on at least one surface of the film, wherein the linear domains are tapered such that the thickness at a center of a cross section of the linear domain is thicker than that at an edge of the linear domain.

The present invention further provides an optical diffuser film with linear domains of varying diffusion, the linear domains comprising light scattering particles located on a top and a bottom surface of the film, wherein the linear domains are tapered such that the thickness at a center of a cross section of the linear domain is thicker than that at an edge of the linear domain.

### BRIEF DESCRIPTION OF THE DRAWINGS

Figure 1 illustrates a typical back-lit liquid crystal display device that uses a diffuser plate;
Figure 2 illustrates an optical diffuser film with linear domains of varying diffusion at one surface of the film according to principles of the present invention;
Figure 3 illustrates an optical diffuser film with linear domains of varying diffusion at both surfaces of the film according to principles of the present invention;
Figure 4 illustrates "striping shims" and their positioning in a multi-manifold extrusion die;
Figure 5 illustrates an LCD backlight unit with conventional optical layers including a diffuser plate and the films of Figures 2 and 3 laminated to the bottom of the diffuser plate;
Figure 6 illustrates an LCD backlight unit with conventional optical layers including a diffuser plate and the diffuser films of Figures 2 and 3 positioned below the diffuser plate and supported via tensioning the diffuser film; and
Figure 7 illustrates an LCD backlight unit with conventional optical layers excluding a diffuser plate and the diffuser films of Figures 2 and 3 positioned below the optical layers and supported via tensioning the diffuser film.

### DETAILED DESCRIPTION OF THE INVENTION

The invention is directed to a directly illuminated LCD device that has an arrangement of light management layers positioned between the LCD panel and the light source. The arrangement of light management layers includes an optical diffuser film with linear domains of varying diffusion located near one or both surfaces of the diffuser film. The core layer, a continuous phase domain of the film has little or no diffusion compared to that of the linear domains at the surface of the film. The transmission and haze levels of each domain of the film are designed to provide a direct-lit LC display whose brightness is relatively uniform across the display. This film is useful when used in conjunction with other light management layers, allowing for the entire light management stack to be located closer to the linear light sources.

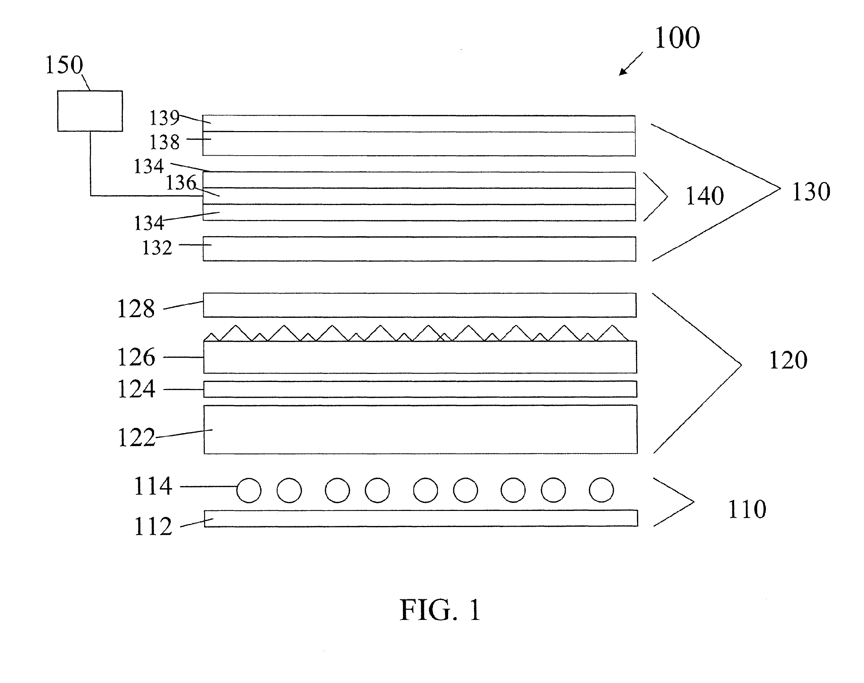

A schematic exploded view of an exemplary embodiment of a direct-lit LC display device 100 is presented in FIG. 1. Such a display device 100 may be used, for example, in an LCD monitor or LCD-TV. The display device 100 is based on the use of a front panel assembly 130, comprising a LC panel 140, which typically comprises a layer of LC 136 disposed between panel plates 134. The plates 134 are often formed of glass, and may include electrode structures and alignment layers on their inner surfaces for controlling the orientation of the liquid crystals in the LC layer 136. The electrode structures are commonly arranged so as to define LC panel pixels, areas of the LC layer where the orientation of the liquid crystals can be controlled independently of adjacent areas. A color filter may also be included with one or more of the plates 134 for imposing color on the image displayed.

An upper absorbing polarizer 138 is positioned above the LC layer 136 and a lower absorbing polarizer 132 is positioned below the LC layer 136. The absorbing polarizers 138, 132 and the LC panel 140 in combination control the transmission of light from the backlight 110 through the display 100 to the viewer. In some LC displays, the absorbing polarizers 138, 132 may be arranged with their transmission axes perpendicular. When a pixel of the LC layer 136 is not activated, it may not change the polarization of light passing through. Accordingly, light that passes through the lower absorbing polarizer 132 is absorbed by the upper absorbing polarizer 138, when the absorbing polarizers 138, 132 are aligned perpendicularly. When the pixel is activated, the polarization of the light passing through is rotated, so that at least some of the light that is transmitted through the lower absorbing polarizer 132 is also transmitted through the upper absorbing polarizer 138. Selective activation of the different pixels of the LC layer 136, for example by a controller 150, results in the light passing out of the display at certain desired locations, forming an image seen by the viewer. The controller may include, for example, a computer or a television controller that receives and displays television images. One or more optional layers 139 may be provided over the upper absorbing polarizer 138, for example to provide mechanical and/or environmental protection to the display surface. In one exemplary embodiment, the layer 139 may include a hardcoat over the absorbing polarizer 138.

The backlight 110 includes a number of light sources 114 that generate the light that illuminates the LC panel 130. The light sources 114 used in a LCD-TV or LCD monitor are often linear, cold cathode, fluorescent tubes that extend across the display device 100. Other types of light sources may be used, however, such as filament or arc lamps, light emitting diodes (LEDs), flat fluorescent panels or external fluorescent lamps.

The backlight 110 may also include a reflector 112 for reflecting light propagating downwards from the light sources 114, in a direction away from the LC panel 140. The reflector 112 may also be useful for recycling light within the display device 100, as is explained below. The reflector 112 may be a specular reflector or may be a diffuse reflector. One example of a specular reflector that may be used as the reflector 112 is Vikuiti® Enhanced Specular Reflection (ESR) film available from 3M Company, St. Paul, Minn. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement 120 of light management layers is positioned between the backlight 110 and the front panel assembly 130. The light management layers affect the light propagating from backlight 110 so as to improve the operation of the display device 100. For example, the arrangement 120 of light management layers may include a diffuser plate 122. The diffuser plate 122 is used to diffuse the light received from the light sources, which results in an increase in the uniformity of the illumination light incident on the LC panel 140. Consequently, this results in an image perceived by the viewer that is more uniformly bright.

The arrangement 120 of light management layers may also include a reflective polarizer 128. The light sources 114 typically produce unpolarized light but the lower absorbing polarizer 132 only transmits a single polarization state, hence about half of the light generated by the light sources 114 is not transmitted through to the LC layer 136. The reflecting polarizer 128, however, may be used to reflect the light that would otherwise be absorbed in the lower absorbing polarizer, and this light may be recycled by reflection between the reflecting polarizer 128 and the reflector 112. At least some of the light reflected by the reflecting polarizer 128 may be depolarized, and subsequently returned to the reflecting polarizer 128 in a polarization state that is transmitted through the reflecting polarizer 128 and the lower absorbing polarizer 132 to the LC layer 136. In this manner, the reflecting polarizer 128 may be used to increase the fraction of light emitted by the light sources 114 that reaches the LC layer 136, allowing the image produced by the display device 100 to be brighter.

Any suitable type of reflective polarizer may be used, for example, multilayer optical film (MOF) reflective polarizers, diffusely reflective polarizing films (DRPF) (e.g., continuous/disperse phase polarizers, wire grid reflective polarizers or cholesteric reflective polarizers).

The arrangement 120 of light management layers may also include a light directing film 126. A light directing film is one that includes a surface structure that redirects off-axis light in a direction closer to the axis of the display. This increases the amount of light propagating on-axis through the LC layer 136, thus increasing the brightness of the image seen by the viewer. One example is a prismatic light directing film, which has a number of prismatic ridges that redirect the illuminated light through refraction and reflection.

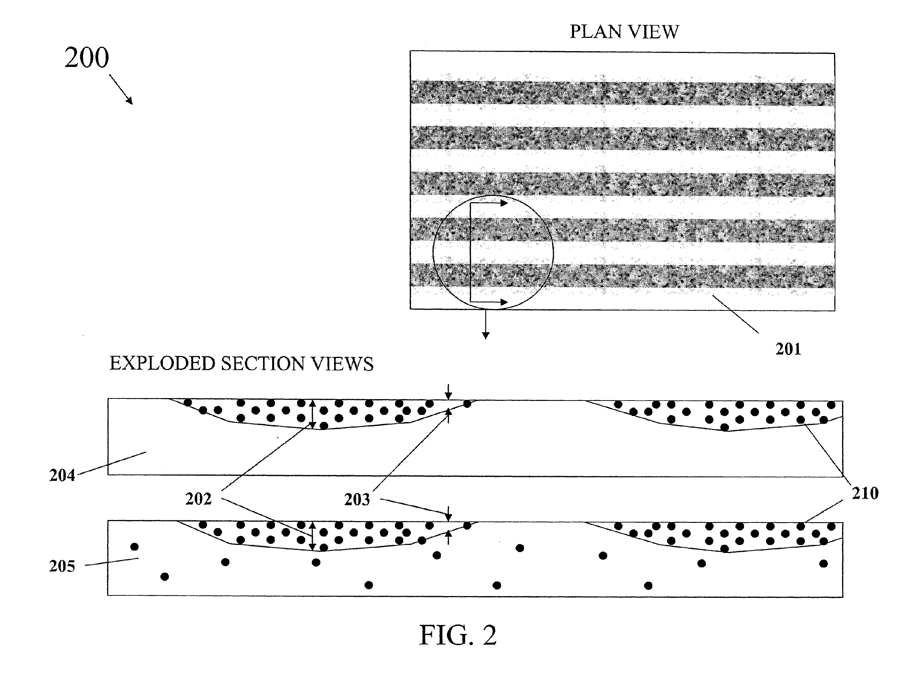

Advantageously, the present invention includes an optical diffuser film 124 with linear domains of varying diffusion located near one or both surfaces of the diffuser film. The core layer, a continuous phase domain, of the film has a lesser level of diffusion as compared to that of the linear domains at the surface of the film. One exemplary embodiment of the present invention is schematically illustrated in FIG. 2. The optical diffuser films 200 include linear domains or stripes 201 near one of the film surfaces that have a relatively high concentration of optically scattering particles 210. The base or core layer which is a continuous domain may not contain any light scattering particles, as in film 204, or may contain a lower concentration of particles than that of the linear surface layers, as in film 205. The linear domains at the surface are tapered such that the center of a linear domain 202 is thicker than the edge of the linear domain 203. This taper is useful when the film is placed above a linear light source in that it diffuses light more near the light source where the light intensity is highest and gradually diffuses the light less further from the light source where the light intensity is lower. This helps to uniformize the light emitted from the diffuser on the surface opposite the light source.

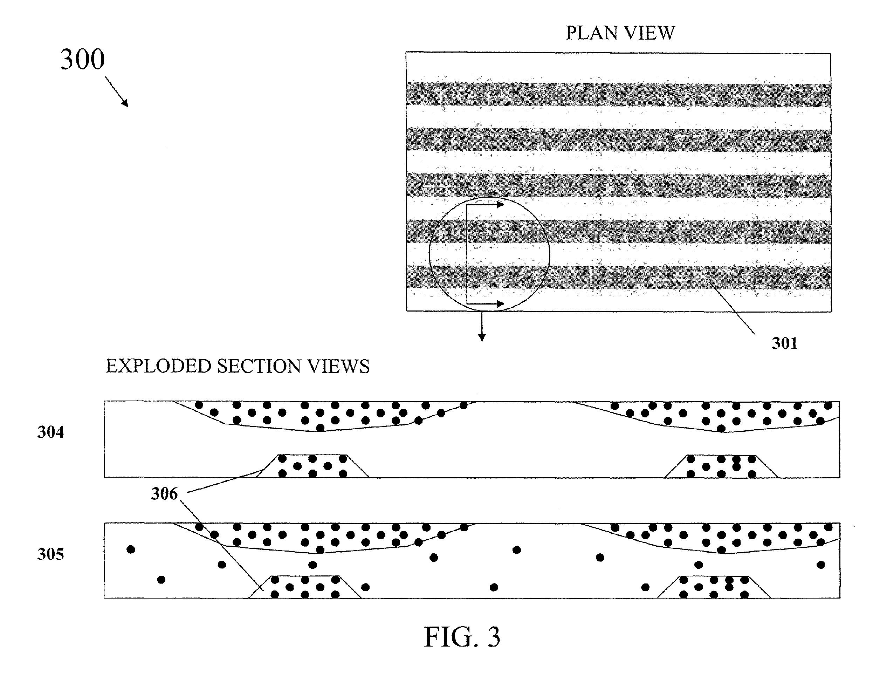

Another exemplary embodiment of the invention is in FIG. 3. The optical diffuser films 300 include linear domains or stripes 301 near both of the film surfaces that have a relatively high concentration of optically scattering particles as in the films of FIG. 2. FIG. 3 shows that for films 304 and 305 an additional narrower linear domain 306 is added to that of the films of FIG. 2. As in Fig. 2, the base or core layer which is a continuous domain can contain no light scattering particles, in the case of film 304, or can contain a lower concentration of particles than that of the linear surface layers, as in the case of film 305. This added linear domain can help boost the level of diffusivity immediately above a light source when used in a backlight. This is useful as the light intensity can increase dramatically immediately above a linear light source.

The diffuser films 204, 205, 304, and 305 are polymeric. Suitable polymer materials used to make the diffuser films may be amorphous or semi-crystalline, and may include homopolymer, copolymer or blends thereof. Example polymer materials include, but are not limited to, amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers. Preferable polymers are polyesters and their copolymers. Most preferred are poly(ethylene terephthalate) (PET); poly(ethylene naphthalate), (PEN)polyesters and any of their copolymers. PET is most suitable as it is much lower in cost than PEN.

The light scattering or diffusing particles 210 can be any particle of different index of refraction from that of the polymer used in the surface layer containing the particle. These particles can be inorganic or organic. Inorganic particles can include any of calcium carbonate, barium sulfate, titanium dioxide, glass, or any other inorganic compound that can be melt blended into a polymer. Typical organic void initiating particles are cross-linked polymeric microbeads. Typically these microbeads are acrylic but can be any polymer and are typically melt blended into a polymer. Alternatively the organic particles can be any polymer that is immiscible with the matrix polymer. Resin pellets of these immiscible polymers can be simply dry blended with the resin pellets of the matrix polymer and extruded together to form a cast film.

Example organic particles include amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers. The choice is dependent on which polymer is immiscible with the matrix polymer of the film.

The light scattering particles 210 typically range from 1.0 to 15.0 microns in width. Most preferable they are between 2 to 6 microns in width. The light scattering particles 210 should be added so as to produce enough diffusivity to function as a diffuser and uniformize the light emitted from the diffuser film yet not be so opaque that the optical luminance of the LCD display is significantly reduced. Preferred loadings of the void initiating particles in the linear domain surface layers are 5 to 50 wt % of the matrix polymer used in that surface layer. The most preferred loadings are 15 to 40 wt % depending on the thickness of the film.

The optical diffuser films 204, 205, 304, and 305 are preferably produced by a process of first mixing the matrix polymer and the light scattering particles 210. Mixing may be accomplished by mixing finely divided, e.g. powdered or granular matrix polymer and scattering particles and, thoroughly mixing them together, e.g. by tumbling them. The resulting mixture is then fed to the film forming extruder. Alternatively, blending may be effected by combining matrix polymer and the light scattering particles via separate material feeding equipment into a hopper feeding a melt mixing extruder such as a twin screw extruder. In this case the extrudate from the mixing extruder is typically cooled in a water bath and pelletized. The pellets are then subsequently extruded in a film forming process.

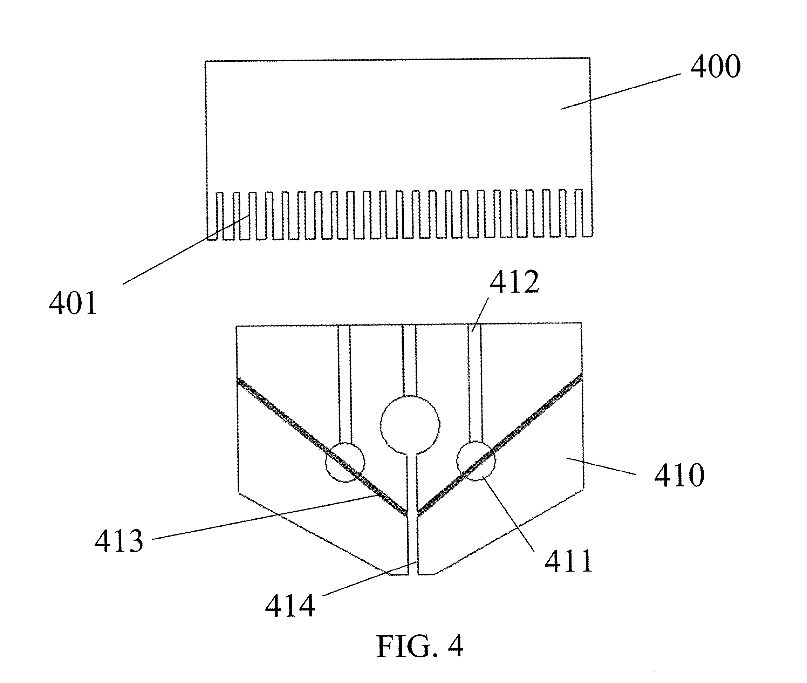

The extrusion, quenching, and in some cases stretching of the polymeric optical diffuser film is typically accomplished using a standard co-extrusion process with the addition of a unique surface striping concept. The process utilizes a standard two or three layer multi-manifold die. A two layer die is used to make a diffuser with linear diffusive domains on one surface, while a three layer die is used to make a film with linear diffusive domains on both surfaces. The film process involves first extruding the pre-mixed polymer, typically using one or two single screw extruders. Simultaneously neat polymer, or polymer blended with a lower concentration of light scattering particles, is extruded through another extruder. The melt flows from the extruders are piped to the multi-manifold die such that the melt with the higher concentration of light scattering particles is fed to one or two outer layers of the die, depending if a two or three layer multi-manifold die is used. The neat polymer melt, or polymer melt with the lower concentration of light scattering particles, is fed to the other outer layer or the center layer depending if a two layer or three layer multi-manifold die is used. Unique "striping shims" are installed in the one or two outer layers of the multi-manifold die so as to produce the linear domains or stripes in the extruded film. FIG. 4 illustrates the "striping shims" 400 and where they are positioned in the die 410. All flows are initially fed to the die through feed ports 412 on top of the die. The "striping shims" 400 are typically brass gaskets that are positioned between the two parts of the die which form the manifold 411 and internal slot 413. They are installed in the manifolds to which the polymer melt with higher concentration of light scattering particles is fed. The "striping shims" 400 extend into the internal slot 413 of the multi-manifold die. The internal slot is the slot through which the polymer melt flows and converges with the other flows being fed to the die. The "striping shims" 400 are cut with periodic openings 401 in the area filling the internal slot 413. The part of the "striping shim" between the openings completely closes off the internal slot. The openings are sized in width to define the width of the subsequent linear domain being formed by the die. The periodic openings 401 are spaced such that the linear domains in the final film are centered directly over the array of linear light sources of the backlight in which the film is to be subsequently utilized. As the polymer melt flows through the internal slots which the "striping shims" are positioned the melt can only flow through the openings in the shim forming stripes which converge with the continuous flow of the core or base layer which is formed in a slot without a "striping shim". The core or base layer comprises the melt which has no or less concentration of light scattering particles than the linear domains or stripes. The formed layers of polymer melt then exit the die through the final slot 414 after all the layers have converged. As the formed layered film exits the die it is rapidly quenched upon a chilled casting drum so that the matrix polymer component of the film solidifies.

In a preferred embodiment where polyester is used as the matrix polymer, the film base is then biaxially oriented by stretching in mutually perpendicular directions at a temperature above the glass-rubber transition temperature of the matrix polymer. Generally the film is stretched in one direction first and then in the second direction although stretching may be effected in both directions simultaneously if desired. In a typical process the film is stretched firstly in the direction of extrusion over a set of rotating rollers or between two pairs of nip rollers and is then stretched in the direction transverse thereto by means of a tenter apparatus. The film may be stretched in each direction to 2.5 to 5.0 times its original dimension in each direction of stretching. Upon stretching voids may initiate around the light scattering particles. The degree of any voiding is dependent upon the particle type, size, and concentration as well as the stretching temperature of the film and the ratio to which the film is stretched. Any voiding increases the degree of light scattering as the index of refraction of the gas in the void is much lower than the matrix polymer. The stretching can also enhance the degree of crystallinity of the polymer matrix of the film thus making the film less prone to shrinking under test conditions. The final stretched thickness of the film is preferably in the 25 to 500 microns thickness range. The most preferred thickness range is between 50 to 250 microns. This is significantly thinner than diffuser plates used in conventional LCD backlights.

In the case of a polyester film comprising a crystalline polyester, like polyethylene-terphthalate (PET), after the film has been stretched and an optical diffuser film formed, it is heat set. Heat setting is done by heating to a temperature sufficient to crystallize the matrix polymer whilst restraining the voided polymeric optical diffuser against retraction in both directions of stretching. This process enables the film to meet shrinkage requirements of less than 1.0% when tested at temperatures up to 80°C.

The optical diffuser films 204, 205, 304, and 305 may also include optical brighteners that convert UV light into visible light. Such optical brighteners must be chosen from those which are thermally stable and can survive the extrusion temperatures used to fabricate the optical diffuser film. Preferred optical brighteners comprise benzoxazolyll-stilbene compounds. The most preferred optical brightener comprises 2, 2'-(1, 2-ethenediyldi-4, 1-phenylene)bisbenzoxazole. These optical brighteners can be added to the film during the resin blending process and can be added via master batch pellets at the appropriate ratio. The appropriate ratio is that that would let down the concentration of the master batch pellet with the rest of the resin pellets to a concentration preferably between 0.01 and 0.1 wt%. In the most preferred embodiment the optical brightener will be added to attain a concentration between 0.02 and 0.05%wt.

The optical diffuser films 204, 205, 304, and 305 may also include an antistatic coating to prevent dirt attraction. Anyone of the known antistatic coatings could be employed.

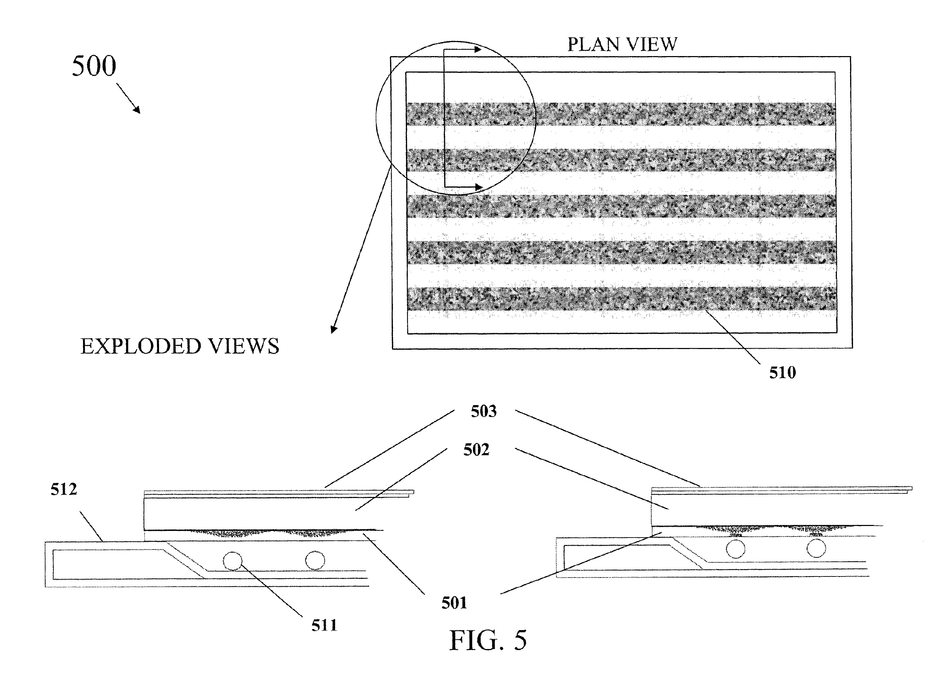

Another exemplary embodiment of the present invention is schematically illustrated in FIG. 5. The arrangement of light management layers 500 includes an optical diffuser film 501 with linear domains of varying diffusion 510 located near one or both surfaces of the diffuser film. The core layer, a continuous phase domain, of the film has no or less diffusion as that of the linear domains at the surface of the film. The optical diffuser film 501 is positioned immediately above linear light sources 511. In this embodiment the optical diffuser film 501 is supported by being laminated to a diffuser plate 502 positioned immediately above the optical diffuser film 501. The laminated optical diffuser film 501 and diffuser plate 502 are supported by a frame 512 of an LCD backlight unit. Other optical films 503 can be added to the arrangement of light management layers above the diffuser plate 502. These other optical films 503 may include a prismatic light directing film, a collimating diffuser film, or a reflective polarizer film.

The optical element 500 of Figure 5 can be used in place of the diffuser plate and the optional optical films of conventional LCD displays enabling light management layers to be placed in closer proximity of the linear light sources. This closer proximity is enabled due to the initial uniformizing of the light emitted from the optical diffuser film 501. This enables the entire backlight unit and thus LCD to be made thinner.

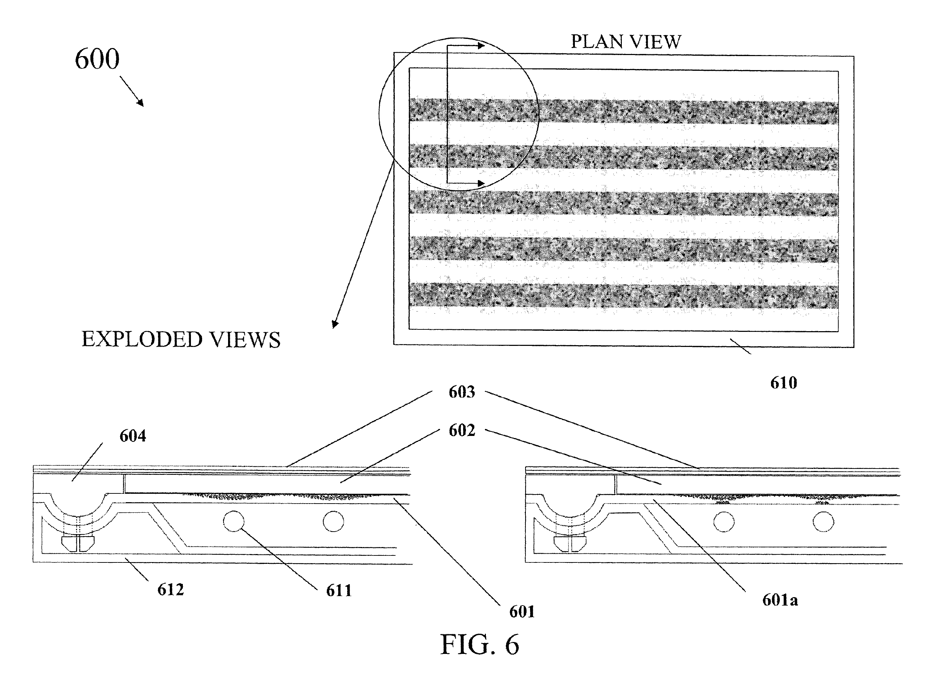

Another exemplary embodiment of the present invention is schematically illustrated in FIG. 6. The arrangement of light management layers 600 includes an optical diffuser film 601 with linear domains of varying diffusion 610 located near one or both surfaces of the diffuser film. The core layer, a continuous phase domain, of the film has no or less diffusion as that of the linear domains at the surface of the film. The optical diffuser film 601 is positioned immediately above linear light sources 611. In this embodiment the optical diffuser film 601 is supported by being tensioned between a crimping frame 604 and a groove in the frame of an LCD backlight 612. A diffuser plate 602 is positioned immediately above the optical diffuser film. Other optical films 603 can be added to the arrangement of light management layers above the diffuser plate 602. These other optical films 603 may include a, a prismatic light directing film, a collimating diffuser film, or a reflective polarizer film.

Also, shown in FIG. 6 is the same arrangement of light management layers 600 but with an optical diffuser film 601a which has linear domains of varying diffusion on both surfaces.

The optical element 600 of Figure 6 can be used in place of the diffuser plate and the optional optical films of conventional LCD displays enabling light management layers to be placed in closer proximity of the linear light sources. This closer proximity is enabled due to the initial uniformizing of the light emitted from the optical diffuser film 601. This enables the entire backlight unit and thus LCD to be made thinner.

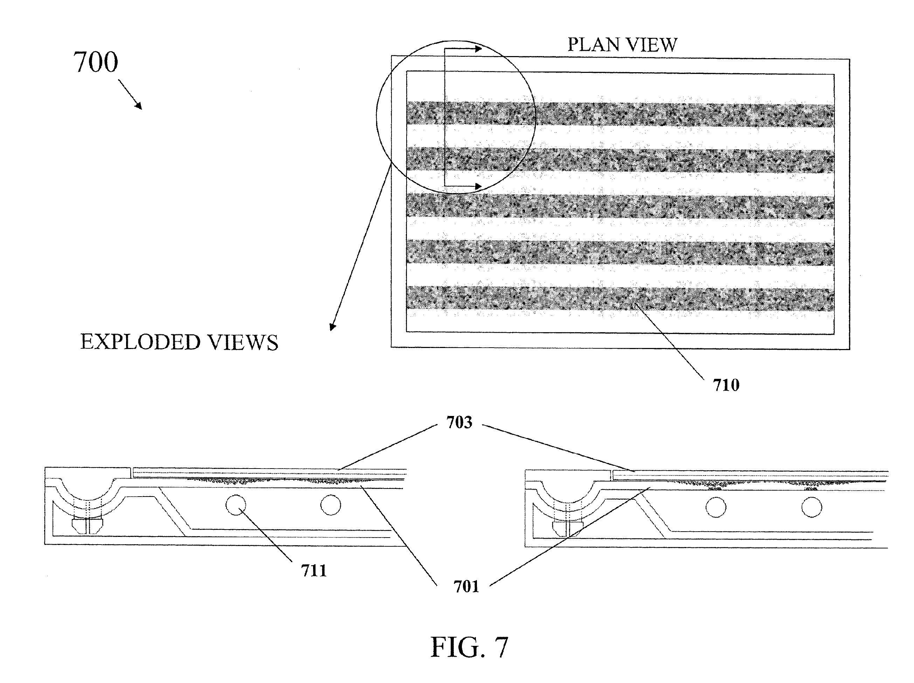

Another exemplary embodiment of the present invention is schematically illustrated in FIG. 7. The arrangement of light management layers 700 includes an optical diffuser film 701 with linear domains of varying diffusion 710 located near one or both surfaces of the diffuser film. The core layer, a continuous phase domain, of the film has no or less diffusion as that of the linear domains at the surface of the film. The optical diffuser film 701 is positioned immediately above linear light sources 711. Like that of arrangement of light management layers 600, in this embodiment the optical diffuser film 701 is supported by being tensioned between a crimping frame and a groove in the frame of an LCD backlight. In this embodiment, however, a diffuser plate is not utilized. Other optical films 703 can be added to the arrangement of light management layers above the optical diffuser film 701. These other optical films 703 may include a, a prismatic light directing film, a collimating diffuser film, or a reflective polarizer film.

The optical element 700 of Figure 7 can be used in place of the diffuser plate and the optional optical films of conventional LCD displays enabling light management layers to be placed in closer proximity of the linear light sources. This closer proximity is enabled due to the initial uniformizing of the light emitted from the optical diffuser film 701. This enables the entire backlight unit and thus LCD to be made thinner

Accordingly, the present invention provides an optical diffuser film with linear domains of varying diffusion located near one or both surfaces of the diffuser film. The core layer or continuous phase of such films has less diffusion than that of the linear domains at the surface of the film. This film is useful when used in conjunction with diffuser plates typically used today in backlit LCD displays, allowing for the diffuser plates to be located closer to the linear light sources.

In addition, the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films, a diffuser plate, and an optical diffuser film with linear domains of varying diffusion located near one or both surfaces of the diffuser film laminated to the bottom of the diffuser plate. The core layer or continuous phase of the optical diffuser films has less diffusion than that of the linear domains at the surface of the film. The arrangement of light management films may include collimation films and/or prismatic light directing films. The arrangement of light management films may optionally include a reflective polarizer.

Also, the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films, and an optical diffuser film with linear domains of varying diffusion located near one or both surfaces of the diffuser film. The core layer or continuous phase of such films has less diffusion than that of the linear domains at the surface of the film. The optical diffuser film with linear domains of varying diffusion may be tensioned and support the other light management layers, including a diffuser plate. The arrangement of light management films may include bead coated collimation films and/or prismatic light directing films. The arrangement of light management films may optionally include a reflective polarizer.

### EXAMPLE

An optical diffuser film with linear domains of varying diffusion located near both surfaces of the diffuser film was prepared and its performance in combination with other light management layers in an LCD TV backlight evaluated.

### EX-1

PET (#7352 from Eastman Chemicals) was melt mixed with 30% by weight of 2 um polymethylsilsesquinoxane(PMSQ) microbeads (Tospearl 120A from General Electric). A Leistritz 27 mm twin screw extruder was used to melt mix the materials and the melt was cooled in a water bath and pelletized. These pellets along with a concentrate of TiO₂ loaded at a nominal 50% by weight in PET (PET 9663 E0002 from Eastman Chemicals) were dried in desiccant dryers at 65° C for 24 hours. Also, neat PET (#7352 from Eastman Chemicals) was dried in a desiccant dryer at 120° C for 24 hours.

Striping shims (500 um thick brass) were installed into the outside manifolds of a multi-manifold extrusion die as in FIG. 4. Both shims had slot openings that were spaced at 8 mm from center to center. One shim had openings that were 2.5 mm wide while the shim in the opposite manifold had shims with openings that were 0.8 mm wide.

Cast sheets were extruded using one 1" extruder to extrude a blend of 40% neat PET (#7352 from Eastman Chemicals) and 60% of the concentrate pellets containing PMSQ microbeads. The second 1" extruder was used to extrude a blend of a 20% by weight concentrate of the PET 9663 E0002 into PET (#7352 from Eastman Chemicals). Each extruder was piped to feed each of the two outside manifolds of FIG. 4, with the first 1" extruder feeding the manifold with the 2.5 mm openings. A 1-1/4" extruder was used to extrude neat PET (#7352 from Eastman Chemicals) into the center manifold of FIG. 4. All melt-streams were extruded at a temperature of 275°C as fed into the extrusion die, also heated at 275°C. The relative flow rate of the three flows were as adjusted via melt pumps installed between each of the extruders and the die. The outside manifold with the shim having the 0.8 mm openings was fed a flow rate of 7.4 cc/min. The outside manifold with the shim having the 2.5 mm openings was fed a flow rate of 20 cc/min. The center manifold being fed neat PET was fed a flow rate of 82 cc/min. As the extruded sheet emerged from the die, it was cast onto a quenching roll set at 55°C. The outer layers extrude as linear domains of high diffusivity as shown in FIG. 3. The final dimensions of the continuous cast sheet were 18 cm wide and 875 um thick. The cast sheet was then stretched at 100°C first 3.2 times in the X-direction (machine direction) and then 3.3 times in the Y-direction. The final film samples were 85 um thick and cross section microscopy of the films showed that the linear domains of higher diffusion were formed at the surface of the films much like the film 304 of FIG. 3. The cross section of the linear domains had a taper with the center of the domain being thicker than the edge much like is shown in film 304 of FIG. 3.

### COMPARISON EXAMPLE

An optical diffuser film with uniform diffusion throughout the film was prepared and its performance in combination with other light management layers in an LCD TV backlight evaluated.

### C-1

PET (#7352 from Eastman Chemicals) was melt mixed with 30% by weight of 2 um polymethylsilsesquinoxane(PMSQ) microbeads (Tospearl 120A from General Electric). A Leistritz 27 mm twin screw extruder was used to melt mix the materials and the melt was subsequently cooled in a water bath and pelletized. These pellets were dried in desiccant dryers at 65° C for 24 hours. Also, neat PET (#7352 from Eastman Chemicals) was dried in a desiccant dryer at 120° C for 24 hours.

Cast sheets were extruded using one 1-1/4" extruder to extrude a blend of 20% by weight of the concentrate pellets containing PMSQ microbeads and 80% by weight neat PET (#7352 from Eastman Chemicals). The final dimensions of the continuous cast sheet were 18 cm wide and 875 um thick. The cast sheet was then stretched at 100°C first 3.2 times in the X-direction (machine direction) and then 3.3 times in the Y-direction. The final film thickness was 85 um and the film appeared to be very uniform in diffusivity throughout.

The measurements of brightness comprised a visual rating of uniformity and an on-axis luminance measurement. These measurements, for example EX1 and control sample C1 were performed on a LCD-TV experimental test bed. The test bed used a commercial backlight unit to mount and illuminate the samples. A description of the back light unit and the measuring equipment follows:

### MEASURMENTS

In order to demonstrate a preferred embodiment of the present invention a commercial LCD TV was procured. The TV chosen was a 42" LG Philips LCD TV, model 42LB5D. The LC panel and the arrangement of light management films were removed from the TV exposing an array of CCFLs in the backlight unit. A 1.5 mm clear polymethylmethacrylate (PMMA) sheet was installed immediately over the CCFLs. Either no sample or one of the samples EX-1 and C-1 were then placed immediately over the 1.5 mm PMMA sheet. The PMMA sheet was used as it mimicked the use of tensioning the diffuser (as in FIG. 7) by both spacing the diffuser above the CCFLs a desired distance and by supporting the diffusers. In the case of EX-1 the linear domains of high diffusivity were aligned immediately over the CCFLs. A conventional 1.5 mm slab diffuser (from 42" LG Philips TV) was installed over either the PMMA sheet or the samples when used. Then a 200 um collimating diffuser (type ML-14M from SKC-Haas) was placed over the slab diffuser. Next, a 225 um prismatic light directing film (type e225 from Rohm and Haas) was placed over the collimating film. Finally, a conventional 100 um bead coated top diffuser (type 100TL4 from Kimoto) was placed over the prismatic light directing film.

The optical performance of the backlight only was then rated for Luminance uniformity with the CCFLs at maximum output. Uniformity was given a visual rating from 1 to 5. A 1 rating meant no variation could be seen, ratings 2 thru 4 were levels of observation of increasing variations in luminance, while a 5 rating meant that the individual CCFLs could easily be observed.

On-axis luminance was then measured by taking three successive measurements at 90 degrees to the lit surface of the optical films. A hand held luminance gauge (Model LS-110 from Minolta) was used. The three readings were averaged to give a single value of on-axis luminance.

Table 1 shows the results of the uniformity rating and on-axis luminance measurements of samples EX-1 and C-1. Also, shown are results of uniformity rating for the same experimental set-up with no diffuser placed immediately over the 1.5 mm PMMA sheet. In this case the uniformity was so poor that no on-axis luminance measurement was made as the value would be erratic and inconsistent. In order to get a fairly good level of uniformity for sample C-1 a stack of 8 sheets of the diffuser had to be used, while only one sheet was used for sample EX-1.

**TABLE 1**

| TRIAL | DIFFUSER ON PMMA SHEET | LUMINANCE UNIFORMITY | ON-AXIS LUMINANCE (cd/mm2) |
|---|---|---|---|
| 1 | No Diffuser | 5 | NA |
| 2 | C-1 (8 sheets) | 2 | 1944 |
| 3 | EX-1 | 1 | 6494 |

As can be seen from Table 1, the present invention as embodied in EX-1 offers excellent luminance uniformity with a very close spacing of the slab diffuser (and other optical films) to the CCFLs. It also offers much higher on-axis luminance than when attaining nearly as good luminance uniformity with uniform diffuser films (8 sheets of C-1).

## Claims

1. An optical diffuser film with linear domains of varying diffusion, the linear domains comprising light scattering particles located on at least one surface of the film, wherein the linear domains are tapered such that the thickness at a center of a cross section of the linear domain is thicker than that at an edge of the linear domain.

2. The optical diffuser film of claim 1 wherein the light scattering particles are 1 to 15 microns wide.

3. The optical diffuser film of claim 2 wherein the light scattering particles are 2 to 6 microns wide.

4. The optical diffuser film of claim 1 wherein the film is selected from the group comprising, poly(carbonate); poly(styrene); acrylates; acrylic copolymers; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; semicrystalline polymers; poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

5. The optical diffuser film of claim 1 wherein the light scattering particles is selected from the group comprising calcium carbonate, barium sulfate, titanium dioxide, glass, poly(carbonate); poly(styrene); acrylates; acrylic copolymers; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; semicrystalline polymers; poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

6. The optical diffuser film of claim 1 wherein the film further comprises light scattering particles outside of the linear domains.

7. An optical diffuser film with linear domains of varying diffusion, the linear domains comprising light scattering particles located on a top and a bottom surface of the film, wherein the linear domains are tapered such that the thickness at a center of a cross section of the linear domain is thicker than that at an edge of the linear domain.

8. The optical diffuser film of claim 7 wherein a width of the linear domains on one surface is wider than that of the linear domains on the opposite surface and the linear domains on both surfaces are positioned with the same on center spacing and aligned with each other.

9. The optical diffuser film of claim 7 wherein the light scattering particles are 1 to 15 microns wide.

10. The optical diffuser film of claim 7 wherein the film is selected from the group comprising, poly(carbonate); poly(styrene); acrylates; acrylic copolymers; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; semicrystalline polymers; poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.
